# EUROPÄISCHE PATENTSCHRIFT

(11) **EP 0 381 024 B1**
(45) Veröffentlichungstag und Bekanntmachung des Hinweises auf die Patenterteilung: **01.12.1993**
(21) Anmeldenummer: 90101355.7
(22) Anmeldetag: 24.01.1990
(51) Int. Cl.: H01R 13/447, B60R 16/02

(54) **Mehradriger Leiterstrang und Verfahren zum Installieren eines solchen mehradrigen Leiterstranges**
Multi-wire phase conductor and method for the installation of this multi-wire phase conductor
Conducteur de phase multifils et procédé pour l'installation d'un tel conducteur de phase multifils

(30) Priorität: 02.02.1989 DE 3903036
(43) Veröffentlichungstag der Anmeldung: 08.08.1990
(73) Patentinhaber: Gebhard, Dietrich, D-76316 Malsch (DE)
(72) Erfinder: Gebhard, Dietrich, D-76316 Malsch (DE)
(74) Vertreter: Witte, Alexander, Dr.-Ing.

(56) Entgegenhaltungen:
- FR-A- 2 302 613
- GB-A- 2 125 513

## Beschreibung

Die Erfindung betrifft einen mehradrigen Leiterstrang zum Installieren in einem Kraftfahrzeug, insbesondere einen 13- oder mehradrigen Leiterstrang für eine an einem Heck eines Kraftfahrzeuges angeordnete Steckdose, die für den elektrischen Anschluß von Kraftfahrzeuganhängern dient.

Die Erfindung betrifft ferner ein Verfahren zum Installieren eines derartigen mehradrigen Leiterstranges in einem Kraftfahrzeug.

Eine 13-polige Steckdose für eine Steckverbindung für den elektrischen Anschluß von Kraftfahrzeug-Anhängern ist beispielsweise aus dem Entwurf zur DIN-Norm 72 570 vom März 1987 bekannt. Ferner sind mehradrige Kabelstränge zum Einbau in solche Steckdosen bekannt.

Eine solche Dose besteht aus einem im wesentlichen hohlen Dosengehäuse, das mit einem Deckel versehen ist. Der Deckel kann gegen die Kraft einer Feder geöffnet werden und er schließt sich aufgrund der Kraft dieser Feder selbsttätig. Im Dosengehäuse ist ein Kontaktträger aufgenommen, der, beispielsweise bei der Ausführung als 13-polige Steckdose, 13 Kontakte trägt. Der Kontaktträger ist dabei vom bodenseitigen Ende her in das Dosengehäuse einschiebbar und entgegen dieser Richtung wieder aus dem Dosengehäuse herausziehbar. Der Kontaktträger selbst ist zweiteilig ausgestaltet und zwar derart, daß zwischen den beiden Teilen die Kontakte unverlierbar aufgenommen werden können. Eine solche Dose wird beispielsweise an der Außenseite einer Karosserie eines Kraftfahrzeuges im Bereich der hinteren Stoßstange montiert. In die Steckdose kann ein Stecker eines Kraftfahrzeug-Anhängers eingesteckt werden, damit dieser vom Kraftfahrzeug mit Strom versorgt wird. Die Steckdose ist über einen mehradrigen, beispielsweise einen 13-adrigen Leiterstrang mit den Armaturen des Kraftfahrzeuges bzw. der Stromquelle verbunden.

Durch immer strenger werdende Vorschriften bezüglich der unabhängigen Stromversorgung von einzelnen Stromverbrauchern in Anhängern, wie beispielsweise unabhängige Stromversorgung von Bremsleuchten, Rückleuchten oder Nebelschlußleuchten, und durch das Vorsehen von immer mehr unabhängig voneinander betreibbaren Stromverbraucherstellen, wie Heizung, Beleuchtung, Kühlung, ist es notwendig geworden, nach und nach immer mehrpoligere Steckdosen bzw. dementsprechend mehradrigere Leiterstränge in einem Kraftfahrzeug vorzusehen. So sind zur Zeit bereits 13-polige Steckdosen im Einsatz, eine 15-polige ist bereits in Erprobung, wobei zukünftige Entwicklungen in Richtung 17- oder 19-polige Ausführungen abzusehen sind.

Von einer solchen vielpoligen Steckdose erstreckt sich ein relativ dicker Leiterstrang weg, der in Kabelkanälen in der Karosserie zum Armaturenbrett bzw. zur Stromquelle geführt werden muß.

Die Tendenz in Richtung immer dicker werdender Leiterstränge durch zunehmend mehrpolige Stromführung, läuft genau entgegen der allgemeinen Tendenz bei Kraftfahrzeugen, nämlich diese bei möglichst geringen Außenmaßen mit möglichst großen Innenmaßen zu versehen.

Großvolumige Kabeltunnel an der Unter- oder Innenseite der Karosserie würden entweder die Bodenfreiheit oder den Freiraum im Innenraum des Kraftfahrzeuges einschränken.

Ein weiteres Problem besteht darin, daß durch die Vielzahl der Kabeladern beim Anschließen an die Steckdose eine hohe Fehlanschlußmöglichkeit besteht. So ist es beispielsweise rein rechnerisch möglich, einen 13-adrigen Leiterstrang in ca. 6,3 Milliarden verschiedenen Möglichkeiten an eine 13-polige Steckdose anzuschließen. Für einen möglichst fehlerfreien Anschluß der einzelnen Adern an die Steckdose sind daher aufwendige Markierungsmaßnahmen notwendig, die jedoch eine besonders geschulte Person für die Montage verlangen. Eine Montage der elektrischen Versorgung bei einer Fließbandproduktion findet in einer relativ späten Phase des Zusammenbaues eines Automobiles statt, so daß durch einen Montageschritt, der mit einer sehr hohen Fehlerquote behaftet ist, und der außerdem einen relativ langen Zeitaufwand wegen besonderer Aufmerksamkeit während der Montage bedarf, ein potentieller Engpaß im Fließbandsystem entsteht, der durch besondere Maßnahmen, wie Verzweigung oder Staumöglichkeit, umgangen werden muß.

Es wurde in der Vergangenheit daher versucht, den Kontaktträger abseits des Fließbandes bereits mit den entsprechenden Kontakten sowie den daran haftenden Kabeladern zu bestücken. In diesem Fall muß dann der Leiterstrang mit daran montierten Kontaktträger vom Armaturenbrett durch entsprechende Kabelkanäle nahezu durch das gesamte Fahrzeug hindurchgeschoben werden, bis er an der Rückseite des Fahrzeugs austritt. Die Kontaktträger solcher bekannten Steckdosen sind als kompakte, steife Bauteile ausgebildet, da sie erhebliche Drücke beim Einschieben der Kontaktstifte des Steckers aufnehmen können müssen. Die im Kontaktträger aufgenommenen Kontakte müssen unter einer gewissen Spannung die eingeschobenen Kontaktstifte des Steckers halten. Durch gewisse Fertigungstoleranzen oder rauhe Handhabung ist es möglich, daß beispielsweise beim Einstecken eines 13-poligen Steckers in eine Steckdose beträchtliche Kräfte vom Kontaktträger aufgenommen werden müssen, die eine entsprechend kompakte und steife Ausbildung desselben notwendig machen.

Bekannte Steckdosen sind im wesentlichen als Hohlkörper ausgebildet, in die ein mit den Leitern und Kontakten bestückter Kontaktträger von der Bodenseite her eingeschoben werden kann. Damit der Kontaktträger exakt positioniert in der als Hohlkörper ausgebildeten Steckdose sitzt, weist er an seiner Außenkontur Montagemerkmale wie abstehende spinnenartige Beine oder vorspringende Nasen auf, die in entsprechende Innennuten an der Steckdose eingreifen, so daß solche Kontaktträger Außenkontur Maße aufweisen, die beträchtlich über die Außenkontur des Leiterstranges hinausgehen, und daher durch Kabelkanäle in Kraftfahrzeugen nicht mehr oder nur sehr schwierig hindurchreichen. Sind in dem Kabelkanal gar Krümmungen oder Biegungen vorgesehen, so besteht die Gefahr, daß sich die steifen und sperrigen Kontaktträger verkanten und nur noch unter Gewalt, ggf. unter Zerstörung aus dem Kabelkanal herausgenommen werden können.

Es wäre zwar grundsätzlich möglich, entsprechend groß dimensionierte Kabelkanäle in Kraftfahrzeugkarosserien vorzusehen, dies würde jedoch, wie eingangs erwähnt, zu einer voluminösen Bauweise der Karosserie führen. Bedenkt man, daß ein solcher Kabelstrang nur ein einziges Mal bei der Montage durch das Fahrzeug hindurchgezogen werden muß, so wäre das Vorsehen eines großvolumigen Leiterkanals ggf. durch Umrüsten bereits gängiger oder noch jahrelang zu fertigender Modelle bzw. die dafür erforderlichen Werkzeugänderungen nur für diesen einzigen Vorgang unwirtschaftlich.

Aufgabe der vorliegenden Erfindung ist daher, hier Abhilfe zu schaffen und einen mehradrigen Leiterstrang zum Installieren in einem Kraftfahrzeug zu schaffen, der einfach und sicher montierbar ist, d.h. insbesondere einfach und ohne Beschädigungsgefahr durch enge Kabelkanäle verlegbar und anschließend einfach an eine mehrpolige Steckdose anschließbar ist, und es ist ferner Aufgabe der vorliegenden Erfindung, ein Verfahren zum Installieren eines solchen mehradrigen Leiterstranges zu schaffen.

Erfindungsgemäß wird die Aufgabe bei einem mehradrigen Leiterstrang dadurch gelöst, daß die einzelnen Leiter durch ein Element zusammengehalten werden, das die Leiter in ihrer Lage relativ zueinander unveränderbar festlegt, und daß die in die Steckdose einzubringenden Kontakte eng aneinanderliegend von einer Schutzkappe umschlossen sind.

Erfindungsgemäß wird die Aufgabe bei einem Verfahren gelöst, durch a) Vorkonfektionieren der mit Kontakten versehenen Leiter unter unveränderbarer Festlegung der relativen Lage der einzelnen Leiter zueinander, b) Aneinanderlegen der Kontakte zu einem kompakten Bündel, c) Aufbringen einer engsitzenden Schutzkappe auf das Bündel, d) Verlegen des Leiterstranges durch Kabelkanäle im Kraftfahrzeug mit der Schutzkappe voran zur Stelle der Steckdose und e) Abziehen der Schutzkappe und Einbringen der Kontakte in die Steckdose.

Durch Vorsehen des Elements, das die einzelnen Leiter in ihrer relativen Lage unveränderbar zueinander hält, befinden sich die Leiter bereits in der relativen Position zueinander, die sie in der endmontierten Steckdose einnehmen. Es ist daher möglich, den so vorkonfektionierten Leiterstrang vor dem Einbauen zu überprüfen, d.h. beispielsweise den elektrischen Anschluß eines Kontakts an den Leiter bereits mit der Poligkeit wie im Endzusammmenbau zu testen. Durch das enge Zusammenlegen der Kontakte, deren Außendurchmesser größer als der Außendurchmesser der Leiter ist, wird ein kompaktes durchmessergeringstes Bündel geschaffen, das durch einen entsprechend engen Kabelkanal durchgeführt werden kann und dessen Durchmesser wesentlich geringer ist als der Durchmesser eines Hüllkreises um die in einer Steckdose montierten Kontakte. Im endmontierten Zustand können die Kontakte selbstverständlich nicht eng aneinanderliegen, da sonst ein Kurzschluß stattfinden würde. Sie müssen aus Isolationszwecken einen gewissen Abstand voneinander aufweisen, was dann zu einer entsprechend großvolumigen Bauweise der Steckdose führt.

Durch Aufnehmen der Kontakte in einer Schutzkappe sind diese empfindlichen Elemente vor Verschmutzung und Beschädigung geschützt, und außerdem in dieser kompakten Anordnung fest gehalten. Der so vorkonfektionierte Kabelstrang kann, ohne daß die relative Lage der einzelnen Leitern zueinander verändert wird, durch einen so engen Kabelkanal hindurchgebracht werden, der gerade dem Außendurchmesser der Schutzkappe entspricht. Dabei kann der Leiterstrang mit der Schutzkappe voran durch einen Kabelkanal geschoben oder gezogen werden. Im letzteren Falle ist dann an der Schutzkappe eine Öse vorgesehen, an der ein Zugseil oder dgl. befestigt werden kann.

Nach Durchbringen des Leiterstranges durch den Kabelkanal, beispielsweise nach Austreten aus der Heckseite eines Kraftfahrzeuges, kann die Schutzkappe abgenommen werden und die Leiter liegen weiterhin in ihrer richtigen Relativlage zueinander. Die Kontakte müssen dann lediglich noch in die Steckdose eingeführt werden, wobei es beispielsweise genügt, einen Kontakt durch eine geeignete Markierung einer bestimmten Position in der Steckdose zuzuordnen, was ausreichend ist, um dann die restlichen Kontakte bzw. die damit verbundenen Leiter in die zutreffende Position zu bringen. Nach Durchtreten durch den engen Kabelkanal können dann selbstverständlich die Kontakte einen wesentlich größeren Abstand voneinander aufweisen als im aneinandergelegten Zustand in der Schutzkappe, je nachdem wie dies aus elektrotechnischen Gründen notwendig ist. Es ist somit möglich, einen gesamten Leiterstrang als sogenannten Kabelbaum vorzukonfektionieren und zu prüfen, bevor er in einem raschen und einfachen Arbeitsvorgang im Kraftfahrzeug verlegt wird.

In einer besonderen Ausgestaltung des erfindungsgemäßen Verfahrens wird in Schritt a) jeder der Leiter durch ein bestimmtes Loch eines Elements gefädelt, wobei das Element ein Lochbild aufweist, das der Anordnung der Kontakte in der Steckdose entspricht.

Diese Maßnahme hat den Vorteil, daß die Leiter rasch und einfach, ggf. auch maschinell auf das Element aufgefädelt werden können, wobei die relative Lage der einzelnen Leiter zueinander bereits dem Lochbild in der endfertigen Steckdose entspricht. Bei einer 13-poligen Steckdose ist das Lochbild dergestalt, daß neun umfängliche auf einem äußeren Umfangskreis angeordnete Leiter vier vom Umfangskreismittelpunkt seitlich versetzt angeordnete Leiter umschließen. Da jedem Loch dieses Lochbilds ein bestimmter Pol zugeordnet ist, kann dies bereits beim Einfädeln in das Element berücksichtigt werden. Die Leiter können dabei, ohne daß sie mit Kontakten versehen sind, oder nur an einem Ende mit einem Kontakt versehen, durch das entsprechende Loch gefädelt werden und dann endseitig mit dem/den Kontakt(en) verbunden werden. Nach Anbringen der Kontakte, die einen größeren Durchmesser als die Löcher aufweisen, sind die Leiter unverlierbar am Element gefangen und behalten andauernd ihre relative Lage zueinander bei. Es ist auch möglich das Element aus weichelastischem Material herzustellen, so daß die Löcher zum Durchfädeln der Kontakte geweitet werden können, die sich nach Durchtritt des Kontaktes wieder verengen, so daß dadurch ein Leiter gegen Abziehen vom Element gefangen ist. Durch erneutes Aufweiten kann jedoch ein fehlerhafter oder falsch montierter Leiter samt Kontakt wieder abgezogen werden. Es ist ferner auch möglich, auf einer Seite des Elements um die Löcher schräg angestellte Lippenränder anzuordnen, die ein Durchschieben eines Kontaktes samt Leiter in einer Richtung ermöglichen, in der entgegengesetzten Richtung ein Abziehen jedoch sperren. Durch Halten des Leiterstranges, beispielsweise an einem Ende anhand der Kontakte und Entlangschieben des Elements zwischen den Kontakten, ist eine geradlinige straffe Ausrichtung des Leiterstranges möglich, beispielsweise um diesen zu verpacken oder vor der Endmontage auszulegen.

In einer weiteren Ausgestaltung des erfindungsgemäßen Verfahrens wird das Element in Schritt c) mit in die Schutzkappe eingebracht.

Diese Maßnahme hat den Vorteil, daß die Kontakte in der Schutzkappe besonders exakt festsitzend und auch durch das Element geschützt aufgenommen sind.

In einer vorteilhaften Ausgestaltung des Verfahrens werden die Verfahrensschritte a) bis c) zeitlich und örtlich getrennt von den Verfahrensschritten d) und e) durchgeführt.

Die Maßnahme hat den Vorteil, daß der Leiterstrang bei einem Hersteller vorgefertigt und geprüft werden kann. Der vormontierte Leiterstrang kann dann zum Automobilhersteller transportiert werden und dort endmontiert werden.

In einer weiteren vorteilhaften Ausgestaltung des Verfahrens wird die Schutzkappe erst unmittelbar vor Einbringen der Kontakte in die Steckdose abgezogen.

Diese Maßnahme hat den Vorteil, daß bei einem bereits verlegten Leiterstrang, der beispielsweise aus der Heckseite eines auf einem Fließband bewegten Fahrzeuges herausragt, die Kontakte solange geschützt sind, bis sie in die Steckdose eingebaut werden.

In einer weiteren besonderen vorteilhaften Ausgestaltung der Erfindung ist das Element als Lochscheibe ausgebildet.

Diese Maßnahme hat den Vorteil, daß ein kostengünstig und einfach herstellbares Element geschaffen wird, das die einzelnen Leitern zueinander unverrückbar hält.

In einer weiteren vorteilhaften Ausgestaltung ist die Lochscheibe passend in die Schutzkappe aufnehmbar.

Diese Maßnahme hat den Vorteil, daß die Lochscheibe gleichzeitig als Haltescheibe in der Schutzkappe fungiert.

In einer weiteren vorteilhaften Ausgestaltung der Erfindung ist der Leiterstrang in einem Kabelschlauch aufgenommen, an dessen einem Ende, an dem die mit den in die Steckdose einzubringenden Kontakte versehenen Leiter austreten, ein das Kabelschlauchende ringförmig umschließender Stopfen vorgesehen, der als Verschlußstopfen für die Schutzkappe dient.

Diese Maßnahme hat den Vorteil, daß die Schutzkappe samt darin aufgenommenen Kontakten und auch ggf. das Element sicher vor Beschädigungen und Verschmutzungen gesichert sind. Somit können vormontierte Leiterstränge vor Korrosion geschützt auf längere Zeit gelagert werden. Der Stopfen selbst kann dann bei der endmontierten Steckdose als Anlagefläche für eine Topfdichtung oder auch als endseitiger Verschluß eines Kabelkanals dienen.

In einer weiteren vorteilhaften Ausgestaltung der Erfindung weist die Lochscheibe eine solche Stärke auf, daß die Leiteranschlußteile der Kontakte, über die die Kontakte mit den Leitern verbunden sind, teilweise in der Lochscheibe aufnehmbar sind.

Diese Maßnahme hat den Vorteil, daß die fest in dem Element aufgenommenen Kontakte exakt parallel zueinander ausgerichtet sind, und außerdem in einer axial fixierten Lage haltbar sind. Dadurch kann die Schutzkappe auch einfach aufgeschoben werden. Die Kontakte sind selbstverständlich vom Element abziehbar aufgenommen, da sie ja zur Endmontage in der Steckdose in radialer Richtung voneinander weg bewegt werden müssen.

In einer weiteren vorteilhaften Ausgestaltung der Erfindung ist die Schutzkappe als einseitig offenes Kunststoffrohr ausgebildet, das vom teilweise in dessen Innenraum einreichenden Stopfen verschließbar ist.

Diese Maßnahme hat den Vorteil, daß ein äußerst kostengünstiges, ggf. als Wegwerfartikel ausgebildetes Bauelement vorgesehen ist, um die Kontakte beim Lagern, Transportieren und insbesondere beim Verlegen des Leiterstranges zu schützen.

In einer weiteren vorteilhaften Ausgestaltung weist das Element ein Montagemerkmal auf, das zur Ausrichtung des Leiterstranges vor Einbringen in die Steckdose dient.

Diese Maßnahme hat den Vorteil, daß, insbesondere in Zusammenhang mit der zuvor erwähnten Ausgestaltung des Elements mit exakt längs ausgerichteten Kontakten es der Montageperson erleichtert ist, bei dem aus der Heckseite austretenden Leiterstrang genau die Drehstellung aufzufinden, in der die Kontakte dann in den Innenraum der Steckdose eingebracht werden müssen.

Diese Maßnahme ist insbesondere auch in Zusammenhang mit der Ausbildung des Elements mit dem entsprechenden Lochbild wie die Steckdose günstig, da bei dem beispielsweise eingangs erwähnten charakteristischen Lochbild einer 13-poligen Steckdose, ein mit einem entsprechenden, wenn auch enger aneinanderliegenden Lochbild ausgestattetes Element, die Zuordnung zum Innenraum der Steckdose erleichtert ist.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: einen Längsschnitt längs der Linie I-I in Fig. 2 eines erfindungsgemäßen Leiterstranges, der gerade durch einen Kabelkanal eines Kraftfahrzeuges geschoben wird;
- Fig. 2: einen Schnitt längs der Linie II-II in Fig. 1;
- Fig. 3: einen Längsschnitt einer an einem Kraftfahrzeug montierten Steckdose, in der ein erfindungsgemäßer Leiterstrang eingebaut ist; und
- Fig. 4: die räumliche Anordnung der Kontakte der Steckdose von Fig. 4.

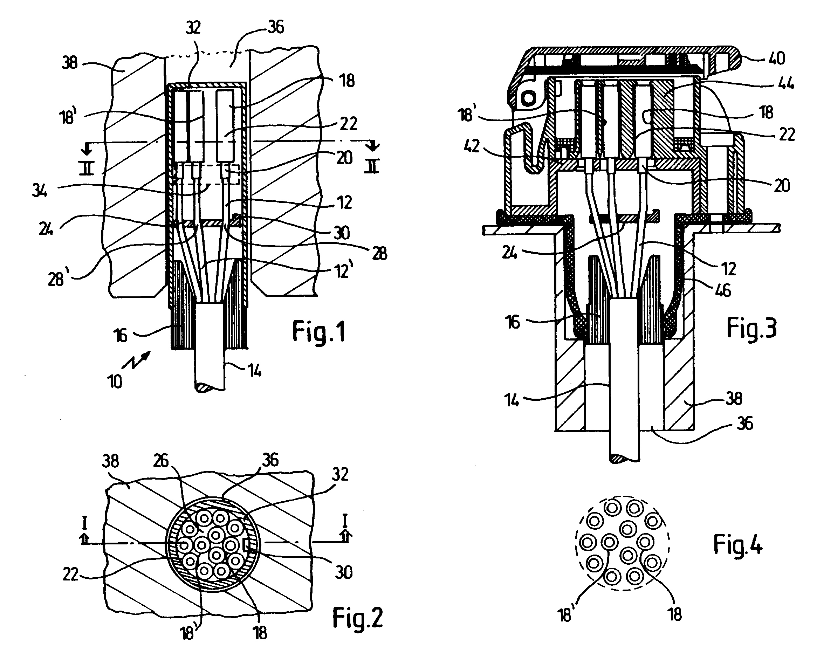

Ein in Fig. 1 und 2 dargestellter Leiterstrang 10 enthält dreizehn Leiter 12, 12′, ..., die in einem Kabelschlauch 14 geführt werden.

Das Ende des Kabelschlauchs 14, aus dem die Leiter 12, 12′, ... austreten, ist mit einem ringwulstartigen Stopfen 16 versehen.

Am äußersten Ende sind die Leiter 12, 12′, ... jeweils mit Kontakten 18, 18′, ... versehen.

Jeder Kontakt 18, 18′, ... weist ein Leiteranschlußteil 20 auf, über das er mit dem entsprechenden Leiter 12, 12′, ... verbunden ist. Endseitig geht jedes Leiteranschlußteil 20 in ein hohlzylindrisches Hülsenteil 22 über, in das hier nicht näher dargestellte Kontaktstifte eines Steckers eintreten, und dadurch für einen elektrisch leitenden Kontaktschluß sorgen.

Im Bereich zwischen dem Ende des Kabelschlauches 14 und den Kontakten 18, 18′ .... ist ein Element 24 vorgesehen, das als Lochscheibe 26 ausgebildet ist. Die Lochscheibe 26 weist dreizehn Löcher 28, 28′, ... auf, wobei jeweils durch ein Loch 28 ein Leiter 12 geführt ist.

Der Durchmesser der Löcher 28 ist derart, daß ein Leiter 12 durchgleiten kann, ein Kontakt 18 jedoch nicht durch ein Loch 28 hindurchtreten kann.

Beim in Fig. 1 dargestellten Ausführungsbeispiel werden die Leiter 12, 12′, ..., bevor sie mit den Kontakten 18, 18′, ... verbunden werden, durch die entsprechenden Löcher 28, 28′, ... im Element 24 durchgeschoben, und werden, nachdem sie auf den zutreffenden Sitz geprüft wurden, d.h. ob ein bestimmter Leiter 12 auch durch das für ihn bestimmte Loch 28 hindurchgezogen wurde, mit einem Kontakt 18 verbunden. Dieser Montagevorgang kann herstellerseits durchgeführt werden, d.h. abseits der Stelle, an der der Leiterstrang eingebaut werden soll.

Das Lochbild der Lochscheibe 26, das insbesondere aus Fig. 2 zu entnehmen, ist derart, daß neun auf einem Umfangskreis unter Freilassen einer Lücke aneinanderliegende Kontakte 18, 18′, resultieren. In diesem aus den neun Kontakten 18 umgrenzenden Umfangskreis sind vier weitere Kontakte aufgenommen, wobei jeder dieser Kontakte zumindest mit drei anderen Kontakten in Berührung steht. Dieses, in Fig. 2 dargestellte Lochbild, entspricht in seiner Anordnung dem Lochbild, wie es in der Steckdose bzw. im Stecker vorgesehen ist, wobei dieses Lochbild aus Fig. 4 zu entnehmen ist.

Die Kontakte 18 im Lochbild von Fig. 2 sind gegenüber dem Lochbild von Fig. 4 radial auf den Umfangskreismittelpunkt hinzu zusammengeschoben.

Wie insbesondere aus Fig. 1 zu entnehmen, sind die aneinanderliegenden Kontakte 18, 18′ samt anhängenden Leitern 12, 12′, ... und die diese in Ausrichtung haltende Lochscheibe 26 in einer hohlzylindrischen Schutzkappe 32 aufgenommen, deren Innendurchmesser gerade dem äußeren Hüllkreis um die Außenkontur der neun ringförmig angeordneten Kontakte 18 (siehe Fig. 2) entspricht. Dadurch sind die Kontakte 18, 18′ radial unverrückbar auf engstem Raum in der Schutzkappe 32 aufgenommen.

Der Stopfen 16 reicht zum Teil in den Innenraum der Schutzkappe 32 hinein, er besteht aus weich elastischem Material und verschließt die Schutzkappe dichtend. Er umschließt ferner den Kabelschlauch 14 dichtend, so daß in der in Fig. 1 dargestellten Position keine Feuchtigkeit, Verschmutzung oder dgl. in den Innenraum der Schutzkappe 32 eindringen kann.

Zur Montage wird der Leiterstrang 10 mit der Schutzkappe 32 voraus in einen Kabelkanal 36, beispielsweise in einer Karosserie 38 eines Kraftfahrzeuges eingeschoben und durch Schieben in Richtung Schutzkappe 32, in der Darstellung von Fig. 1 also von unten nach oben, durch den Kabelkanal 36 bewegt.

Nachdem die Schutzkappe 32 den Kabelkanal endseitig durchtreten hat und, beispielsweise an der Rückseite eines Kraftfahrzeugs ausgetreten ist, wird die Schutzkappe 32 abgezogen. Diese wird entweder verworfen oder dem Hersteller zur Wiederverwendung zurückgeführt.

Die Kontakte 18, 18′ werden anschließend in den Innenraum einer Steckdose 40 (siehe Fig. 3) in dafür vorgesehene Öffnungen in einem Kontaktaufnahmeteil 44 eingeschoben. Dazu werden die Kontakte 18, 18′, ... zunächst in ein Plattenelement 42 eingebracht, das ein Lochbild, wie es in Fig. 4 dargestellt ist, aufweist.

Da, wie zuvor erwähnt, das Lochbild der Lochscheibe 26 dem Lochbild des Plattenelements 42 entspricht, abgesehen von einer auf den Mittelpunkt der Lochscheibe zugerichteten Verschiebung, ist die Zuordnung jedes einzelnen Kontaktes 18 in die entsprechende Öffnung im Plattenelement 42 problemlos.

Dies wird noch dadurch erleichtert, daß an der Lochscheibe 26 ein Montagemerkmal 30 vorgesehen ist, das mit einem entsprechend, hier nicht näher dargestellten Montagemerkmal an der Innenseite des Plattenelements 42 zusammenwirkt, d.h. werden diese beiden Montagemerkmale zur Deckung gebracht, befindet sich jedes Hülsenteil 22 eines Kontaktes 18 zwar etwas versetzt, jedoch unmittelbar vor der zugehörigen Öffnung im Plattenelement 42. Durch Ausbildung von trichterförmigen Einführöffnungen im Plattenelement 42 können dann die Kontakte 18, 18′, ... einfach direkt in das Plattenelement 42 eingeschoben werden.

Anschließend wird das Plattenelement 42, wie zuvor erwähnt, derart in die Steckdose eingeschoben, daß jeder Kontakt 18 in die entsprechende Öffnung im Kontaktaufnahmeteil 44 eintritt. Danach wird das Plattenelement 42 um einen gewissen Betrag seitlich verschoben, so daß die Kontakte mit der Schulter im Übergangsbereich von Hülsenteil 22 zu Leiteranschlußteil 20 auf dem Plattenelement 42 ruhen und vor Herausfallen aus dem Kontaktaufnahmeteil 44 gehindert sind.

In einem Endbereich des Kabelkanals 36, der einen größeren Durchmesser aufweist als der eigentliche Kabelkanal 36, ist ein Abschnitt einer Topfdichtung 46 aufgenommen, die dazu vorgesehen ist, zwischen der Steckdose 40 und der Außenseite der Karosserie 38 abzudichten.

Ein inneres, mit einem Hakenkranz versehenes Ende der Topfdichtung 46 greift in die äußere Umfangskante des durchmesserdickeren Bereiches des Stopfens 16 ein, der selbst wiederum das Ende des Kabelkanals 36 verschließt.

Dadurch, daß das Element 24 auch bei montierter Steckdose 40 auf den Leiter 12, 12′, ... verbleibt, wird auch bei Demontieren von Leiterstrang 10 und Steckdose 40 die geometrische Anordnung der Leiter 12, 12′, ... untereinander beibehalten, so daß ein solcher Leiterstrang wieder verwertet werden kann.

Im in Fig. 1 dargestellten Ausführungsbeispiel war das Element 24 als dünne Lochscheibe ausgebildet.

In einem weiteren Ausführungsbeispiel, das in Fig. 1 durch punktierte Linien angedeutet ist, ist ein Element 34 wesentlich dicker ausgebildet, und nimmt die Leiteranschlußteile 20 der Kontakte 12, 12′ auf. Auch dieses Element 34 ist mit dem in Fig. 2 dargestellten Lochbild versehen und ist aus weichelastischem Material. In diesem Fall ist es auch möglich, die Schutzkappe 32 wesentlich kürzer auszubilden, wobei dann das dicke Element 34 gleichzeitig als Stopfen dienen kann.

## Patentansprüche

1. Verfahren zum Installieren eines mehradrigen Leiterstranges (10) in einem Kraftfahrzeug, insbesondere zum Installieren eines 13- oder mehradrigen Leiterstranges für eine am Heck eines Kraftfahrzeuges angeordnete Steckdose (40) für den elektrischen Anschluß von Kraftfahrzeuganhängern, gekennzeichnet durch
a) Vorkonfektionieren der mit Kontakten (18, 18′, ...) versehenen Leiter (12, 12′, ...) unter unveränderbarer Festlegung der relativen Lage der einzelnen Leiter (12, 12′, ...) untereinander,
b) Aneinanderlegen der Kontakte (18, 18′, ...) zu einem kompakten Bündel,
c) Aufbringen einer engsitzenden Schutzkappe (32) auf das Bündel,
d) Verlegen des Leiterstranges (10) durch zumindest einen Kabelkanal in einem Kraftfahrzeug mit der Schutzkappe (32) voran bis zur Stelle der Steckdose (40), und
e) Abziehen der Schutzkappe (32) und Einbringen der Kontakte (18, 18′, ...) in die Steckdose (40).

2. Verfahren nach Anspruch 1, dadurch gekennzeichnet, daß in Schritt a) jeder der Leiter (12, 12′, ...) durch ein bestimmtes Loch (28, 28′, ...) eines Elements (24, 34) gefädelt wird, wobei das Element (24, 34) ein Lochbild aufweist, das der Anordnung der Kontakte (18, 18′, ...) in der Steckdose (40) entspricht.

3. Verfahren nach Anspruch 2, dadurch gekennzeichnet, daß das Element (24, 34) in Schritt c) mit in die Schutzkappe (32) eingebracht wird.

4. Verfahren nach einem der Ansprüche 1 bis 3, dadurch gekennzeichnet, daß die Verfahrensschritte a) bis c) zeitlich und örtlich getrennt vor den Verfahrensschritten d) und e) durchgeführt werden.

5. Verfahren nach einem der Ansprüche 1 bis 4, dadurch gekennzeichnet, daß in Schritt e) die Schutzkappe (32) erst unmittelbar vor dem Einbringen der Kontakte (18, 18′, ...) in die Steckdose abgezogen wird.

6. Mehradriger Leiterstrang zum Verlegen in einem Kraftfahrzeug (38), insbesondere 13- oder mehradriger Leiterstrang (10) für eine an einem Heck eines Kraftfahrzeuges (38) angeordnete Steckdose (40), die für den elektrischen Anschluß von Kraftfahrzeuganhängern dient, dadurch gekennzeichnet, daß die einzelnen Leiter (12, 12′, ...) durch ein Element (24, 34) zusammengehalten werden, das die Leiter (12, 12′, ...) in ihrer Lage relativ zueinander unveränderbar festlegt, und daß die in die Steckdose (40) einzubringenden Kontakte (18, 18′, ...) eng aneinanderliegend von einer Schutzkappe (32) umschlossen sind.

7. Mehradriger Leiterstrang nach Anspruch 6, dadurch gekennzeichnet, daß das Element (24, 34) ein der Poligkeit der Steckdose (40) entsprechendes Lochbild aufweist, wobei die Anordnung und Beabstandung der Löcher (28, 28′, ...) der Anordnung entspricht, die die Kontakte (18, 18′, ...) einnehmen, falls sie in der Schutzkappe (32) aufgenommen sind, wobei jeweils ein Leiter (12, 12′, ...) durch ein Loch (28, 28′, ...) hindurchläuft.

8. Mehradriger Leiterstrang nach Anspruch 7, dadurch gekennzeichnet, daß das Element (24, 34) als Lochscheibe (26) ausgebildet ist.

9. Mehradriger Leiterstrang nach Anspruch 8, dadurch gekennzeichnet, daß die Lochscheibe (26) passend in der Schutzkappe (32) aufnehmbar ist.

10. Mehradriger Leiterstrang nach einem der Ansprüche 6 bis 9, dadurch gekennzeichnet, daß der Leiterstrang (10) in einem Kabelschlauch (14) aufgenommen ist, an dessen einem Ende, an dem die mit den in die Steckdose (40) einzubringenden Kontakte (18, 18′, ...) versehenen Leiter (12, 12′, ...) austreten, ein das Kabelschlauchende ringförmig umschließender Stopfen (16) vorgesehen ist, der als Verschlußstopfen für die Schutzkappe (32) dient.

11. Mehradriger Leiterstrang nach einem der Ansprüche 8 bis 10, dadurch gekennzeichnet, daß die Lochscheibe (34) eine solche Stärke aufweist, daß Leiteranschlußteile (20, 20′, ...) der Kontakte (18, 18′, ...), über die die Kontakte (18, 18′, ...) mit den Leitern (12, 12′, ...) verbunden sind, zumindest teilweise in der Lochscheibe (34) aufnehmbar sind.

12. Mehradriger Leiterstrang nach Anspruch 10 oder 11, dadurch gekennzeichnet, daß die Schutzkappe (32) als einseitig offenes Kunststoffrohr ausgebildet ist, das vom teilweise in dessen Innenraum hineinreichenden Stopfen (16) verschließbar ist.

13. Mehradriger Leiterstrang nach einem der Ansprüche 6 bis 12, dadurch gekennzeichnet, daß das Element (24) ein Montagemerkmal (30) aufweist, das zur Ausrichtung des Leiterstranges (10) vor Einbringen in die Steckdose (40) dient.

14. Mehradriger Leiterstrang nach einem der Ansprüche 6 bis 13, dadurch gekennzeichnet, daß das Element (24, 34) aus weichelastischem Material hergestellt ist.

15. Mehradriger Leiterstrang nach einem der Ansprüche 6 bis 14, dadurch gekennzeichnet, daß der Durchmesser eines Loches (28) im Element (24, 34) geringer als der größte Außendurchmesser eines Kontaktes (18) ist.

16. Mehradriger Leiterstrang nach einem der Ansprüche 6 bis 14, dadurch gekennzeichnet, daß der Durchmesser eines Loches im Element etwa gleich dem größten Außendurchmesser eines Kontaktes ist, und daß auf einer Seite des Elements um ein Loch herum ein schräg abstehender elastischer Lippenrand vorgesehen ist, der eine durchmessergeringere Öffnung umschließt, so daß ein Kontakt von der anderen Seite des Elements her durch das Element und durch den Lippenrand unter Aufweitung desselben schiebbar ist, ein durchgeschobener Kontakt jedoch in entgegengesetzter Richtung durch den am durchmessergeringeren Leiter anliegenden Lippenrand vor Abziehen gehindert ist.

## Claims

1. Method of installing a multiwire conductor strand (10) in a motor vehicle, in particular of installing a conductor strand having 13 or more wires for a socket (40), arranged at the rear of a motor vehicle, for the electrical connection of motor vehicle trailers, characterized by
a) prefabricating the conductors (12, 12', ...), provided with contacts (18, 18', ...), unalterably fixing the relative position of the individual conductors (12, 12', ...) with respect to one another,
b) laying the contacts (18, 18', ...) alongside one another to form a compact bundle,
c) mounting a close-fitting protective cap (32) onto the bundle,
d) laying the conductor strand (10) through at least one cable duct in a motor vehicle, with the protective cap (32) at the front, up to the location of the socket (40), and
e) pulling off the protective cap (32) and introducing the contacts (18, 18', ...) into the socket (40).

2. Method according to Claim 1, characterized in that in step a) each of the conductors (12, 12', ...) is threaded through a particular hole (28, 28', ...) of an element (24, 34), the element (24, 34) having a hole pattern which corresponds to the arrangement of the contacts (18, 18', ...) in the socket (40).

3. Method according to Claim 2, characterized in that the element (24, 34) is, in step c), introduced at the same time into the protective cap (32).

4. Method according to one of Claims 1 to 3, characterized in that the method steps a) to c) are carried out at a different time and place before the method steps d) and e).

5. Method according to one of Claims 1 to 4, characterized in that in step e) the protective cap (32) is not pulled off until immediately before the inserting of the contacts (18, 18', ...) into the socket.

6. Multiwire conductor strand for laying in a motor vehicle (38), in particular a conductor strand (10) having 13 or more wires for a socket (40), arranged at the rear of a motor vehicle (38), which serves for the electrical connection of motor vehicle trailers, characterized in that the individual conductors (12, 12', ...) are held together by an element (24, 34) which unalterably fixes the conductors (12, 12', ...) in their position in relation to one another, and in that the contacts (18, 18', ...) to be introduced into the socket (40) are enclosed lying closely alongside one another by a protective cap (32).

7. Multiwire conductor strand according to Claim 6, characterized in that the element (24, 34) has a hole pattern corresponding to the hole configuration of the socket (40), the arrangement and spacing of the holes (28, 28', ...) corresponding to the arrangement which the contacts (18, 18', ...) assume if they are accommodated in the protective cap (32), one conductor (12, 12', ...) in each case running through one hole (28, 28', ...).

8. Multiwire conductor strand according to Claim 7, characterized in that the element (24, 34) is designed as a perforated disc (26).

9. Multiwire conductor strand according to Claim 8, characterized in that the perforated disc (26) can be accommodated snugly in the protective cap (32).

10. Multiwire conductor strand according to one of Claims 6 to 9, characterized in that the conductor strand (10) is accommodated in a cable tube (14), at the one end of which, at which the conductors (12, 12', ...) provided with contacts (18, 18', ...) to be introduced into the socket (40) emerge, there is provided a stopper (16) which annularly encloses the end of the cable tube and serves as a sealing stopper for the protective cap (32).

11. Multiwire conductor strand according to one of Claims 8 to 10, characterized in that the perforated disc (34) is of such a thickness that conductor connection parts (20, 20', ...) of the contacts (18, 18', ...), by means of which the contacts (18, 18', ...) are connected to the conductors (12, 12', ...), can be accommodated at least partially in the perforated disc (34).

12. Multiwire conductor strand according to Claim 10 or 11, characterized in that the protective cap (32) is designed as a plastic tube which is open at one end and which can be sealed by the stopper (16) reaching partially into its interior.

13. Multiwire conductor strand according to one of Claims 6 to 12, characterized in that the element (24) has an assembly feature (30), which serves for alignment of the conductor strand (10) before introduction into the socket (40).

14. Multiwire conductor strand according to one of Claims 6 to 13, characterized in that the element (24, 34) is produced from flexible material.

15. Multiwire conductor strand according to one of Claims 6 to 14, characterized in that the diameter of a hole (28) in the element (24, 34) is smaller than the largest outside diameter of a contact (18).

16. Multiwire conductor strand according to one of Claims 6 to 14, characterized in that the diameter of a hole in the element is approximately equal to the largest outside diameter of a contact, and in that on one side of the element there is provided around a hole an obliquely upstanding flexible lip edge, which encloses an opening of smaller diameter, so that a contact can be pushed from the other side of the element through the element and through the lip edge, spreading out the latter, but a pushed-through contact is prevented from being pulled off in the opposite direction by the lip edge bearing against the conductor of smaller diameter.

## Revendications

1. Procédé d'installation d'un conducteur de phase multifils (10) dans un véhicule, en particulier pour l'installation d'un conducteur de phase à 13 fils ou plus pour une prise (40) disposée à l'arrière d'un véhicule en vue du raccordement électrique d'une remorque, caractérisé par
a) le prémontage des conducteurs (12, 12',...) dotés de contacts (18, 18',...) en fixant de manière définitive la position relative des différents conducteurs (12, 12',...),
b) le rassemblement des contacts (18, 18',...) en un faisceau compact,
c) l'application d'un capuchon protecteur ajusté (32) sur le faisceau,
d) l'insertion d'un conducteur de phase (10) dans au moins un canal à câble d'un véhicule, le capuchon protecteur (32) étant placé en avant, jusqu'à l'emplacement de la prise (40), et
e) le retrait du capuchon protecteur (32) et l'insertion des contacts (18, 18',...) dans la prise (40).

2. Procédé selon la revendication 1, caractérisé en ce que lors de l'étape a), chaque conducteur (12, 12',...) est enfilé dans un orifice défini (28, 28',...) d'un élément (24, 34), l'élément (24, 34) présentant une configuration d'orifices correspondant à l'agencement des contacts (18, 18',...) dans la prise (40).

3. Procédé selon la revendication 2, caractérisé en ce que lors de l'étape c), l'élément (24, 34) est également inséré dans le capuchon protecteur (32).

4. Procédé selon l'une des revendications 1 à 3, caractérisé en ce que les étapes a) à c) sont effectuées avant les étapes d) et e) à des instants et en des lieux différents.

5. Procédé selon l'une des revendications 1 à 4, caractérisé en ce que lors de l'étape e), le capuchon protecteur (32) n'est retiré qu'au moment de l'insertion des contacts (18, 18',...) dans la prise.

6. Conducteur de phase multifils à installer dans un véhicule (38), en particulier un conducteur de phase (10) à 13 fils ou plus, pour une prise (40) disposée à l'arrière d'un véhicule (38) en vue du raccordement électrique d'une remorque, caractérisé en ce que les différents conducteurs (12, 12',...) sont maintenus ensemble par un élément (24, 34) qui maintient les conducteurs (12, 12',...) fixes les uns par rapport aux autres, et en ce que les contacts (18, 18',...) à insérer dans la prise (40) sont enserrés à proximité les uns des autres par un capuchon protecteur (32).

7. Conducteur de phase multifils selon la revendication 6, caractérisé en ce que l'élément (24, 34) présente une configuration d'orifices correspondant à la polarité de la prise (40), l'agencement et l'espacement des orifices (28, 28',...) correspondant à l'agencement des contacts (18, 18',...), lorsqu'ils sont logés dans le capuchon protecteur (32), chaque conducteur (12,12',...) traversant un orifice différent (28, 28',...).

8. Conducteur de phase multifils selon la revendication 7, caractérisé en ce que l'élément (24, 34) se présente sous la forme d'un disque perforé (26).

9. Conducteur de phase multifils selon la revendication 8, caractérisé en ce que le disque perforé (26) est adapté pour venir se loger dans le capuchon protecteur (32).

10. Conducteur de phase multifils selon l'une des revendications 6 à 9, caractérisé en ce que le conducteur de phase (10) est logé dans une gaine de câbles (14) à l'extrémité de laquelle où ressortent les conducteurs (12, 12',...) dotés des contacts (18, 18',...) à insérer dans la prise (40), est prévu un bouchon (16) obturant de façon circulaire l'extrémité de la gaine de câbles et servant de bouchon de fermeture pour le capuchon protecteur (32).

11. Conducteur de phase multifils selon l'une des revendications 8 à 10, caractérisé en ce que le disque perforé (34) présente une épaisseur telle que les éléments de connexion aux conducteurs (20, 20',...) des contacts (18, 18',...) par lesquels les contacts (18, 18',...) sont reliés aux conducteurs (12, 12'), peuvent être logés au moins partiellement dans le disque perforé (34).

12. Conducteur de phase multifils selon la revendication 10 ou 11, caractérisé en ce que le capuchon protecteur (32) se présente sous la forme d'un tube en plastique ouvert d'un côté, qui peut être fermé par un bouchon (16) pénétrant partiellement à l'intérieur dudit tube.

13. Conducteur de phase multifils selon l'une des revendications 6 à 12, caractérisé en ce que l'élément (24) présente une caractéristique de montage (30), qui sert à orienter le conducteur de phase (10) avant insertion dans la prise (40).

14. Conducteur de phase multifils selon l'une des revendications 6 à 13, caractérisé en ce que l'élément (24, 34) est fabriqué en un matériau souple.

15. Conducteur de phase multifils selon l'une des revendications 6 à 14, caractérisé en ce que le diamètre d'un orifice (28) ménagé dans l'élément (24, 34) est inférieur au diamètre externe maximal d'un contact (18).

16. Conducteur de phase multifils selon l'une des revendications 6 à 14, caractérisé en ce que le diamètre d'un orifice ménagé dans l'élément est approximativement de même taille que le diamètre externe maximum d'un contact, et en ce qu'il est prévu sur un côté de l'élément, autour d'un orifice, un rebord à lèvre élastique oblique, qui délimite une ouverture de plus faible diamètre, de telle sorte qu'un contact puisse être inséré de l'autre côté de l'élément à travers l'élément et le rebord à lèvre en écartant ce dernier, mais qu'un contact inséré ne puisse pas être retiré dans le sens opposé en raison du rebord à lèvre qui repose contre le conducteur de plus faible diamètre.
